# EUROPEAN PATENT SPECIFICATION

(11) **EP 3 743 279 B1**
(45) Date of publication and mention of the grant of the patent: **07.05.2025**
(21) Application number: 19743310.5
(22) Date of filing: 16.01.2019
(51) Int. Cl.: B32B 27/08, B32B 27/18, B32B 27/30, B32B 27/28, B32B 27/36, B32B 7/035, B32B 7/022

(54) **LAMINATES OF POLYVINYL CHLORIDE SHEET AND CONTINUOUS FIBER REINFORCED THERMOPLASTIC TAPE**
LAMINATE AUS POLYVINYLCHLORIDFOLIE UND ENDLOSFASERVERSTÄRKTEM THERMOPLASTISCHEM BAND
STRATIFIÉS DE FEUILLE DE POLYCHLORURE DE VINYLE ET BANDE THERMOPLASTIQUE RENFORCÉE PAR DES FIBRES CONTINUES

(30) Priority: 23.01.2018 US 201862620798 P; 19.10.2018 US 201862747769 P
(43) Date of publication of application: 02.12.2020
(73) Proprietor: Avient Corporation, Avon Lake, OH 44012 (US)
(72) Inventor: MARTIN, Andrew, Avon Lake, Ohio 44012 (US); DIRIENZO, David, Avon Lake, Ohio 44012 (US); BARAN, William, Avon Lake, Ohio 44012 (US)
(74) Representative: Winter, Brandl - Partnerschaft mbB
(86) International application number: PCT/US2019/013795
(87) International publication number: WO 2019/147449

(56) References cited:
- EP-A2- 0 453 784
- WO-A1-02/058944
- US-A1- 2013 052 386
- US-A1- 2015 308 115
- US-A1- 2015 308 115
- US-A1- 2016 257 395
- US-A1- 2018 037 273

## Description

### FIELD OF THE INVENTION

The present invention concerns a laminate of layers of polyvinyl chloride sheet and a layer or layers of Continuous Fiber Reinforced Thermoplastic (CFRTP) tape in a multi-ply configuration.

### BACKGROUND OF THE INVENTION

People benefit from plastic articles. From their invention in the mid-20th Century until the present, thermoplastic polymers have become the composition of many consumer products. Such products are relatively lightweight, sturdy, and corrosion resistant.

Poly(vinyl chloride) has been a top performing plastic resin for decades. Billions of kilograms of poly(vinyl chloride) (also known as "PVC") resin are molded and extruded each year into countless products. With conventional additives, poly(vinyl chloride) provides unparalleled durability, flame resistance, chemical resistance, weatherability, electrical properties and clarity to name a few. The building and construction markets have long benefited from the physical properties of rigid PVC compounds molded or extruded in a variety of final shapes.

More recently, continuous fiber reinforced thermoplastic ("CFRTP") tapes and sheets of single-ply or multi-ply configuration have been used for automotive, trucking, train, boat, aerospace, sporting goods, and building & construction applications due to their light weight, exceptional strength, impact resistance, and recyclability.

US 2015/0308115 A1 is directed to thermoplastic-based building products, such as thermoplastic-based wall boards, thermoplastic-based composite decking, and other elongated thermoplastic-based building materials, and related methods for preparing the thermoplastic-based building products.

CFRTP sheets of multi-ply configurations such as 0°-90° x-ply or 0°-90°-0° tri-ply are commonly used because they have more balanced mechanical properties along both X and Y directions of the sheet than a CFRTP single-ply sheet.

CFRTP multi-ply sheets based on thermoplastic polyesters such as polyethylene terephthalate glycol (PETG) copolymer have been commercialized by Polystrand, now a business of PolyOne Corporation. The composite tapes of single-ply or the composite sheets of multi-ply configuration, made from amorphous PETG polymer and continuous and unidirectionally positioned glass fibers, have excellent stiffness and toughness, good chemical resistance, and good thermal bond-ability to other substrates including wood, steel, glass, and other polar plastic surfaces, which allows ease of adhering the CFRTP tape sheet of PETG to the other substrates for various structurally reinforced applications.

US 2018/0037273 A1 relates to a surface-coated composite substrate, suitable for vehicle bodies, and in particular hail proof roofs.

### SUMMARY OF THE INVENTION

What the art needs is a marriage of PVC sheet and PETG CFRTP tape into laminates of a variety of construction to provide excellent tensile properties, excellent heat distortion properties, and excellent thermal expansion properties.

This document concerns how PVC sheet of at least 0.635 mm (25 mils) and CFRTP tape of less than 0.508 mm (20 mils) can be layered and oriented to provide those excellent physical properties.

One aspect of the invention is a laminate comprising outer layers of poly(vinyl chloride) sheet, each having at least 0.635 mm thickness and at least one inner layer of CRFTP tape of polyethylene terephthalate glycol having less than 0.508 mm thickness, wherein orientation of the outer layers can be the same or different and wherein orientation of the at least one inner layer can be the same or different from the orientations of the outer layers.

### EMBODIMENTS OF THE INVENTION

### Polyvinyl Chloride Resins

Polyvinyl chloride polymers are widely available throughout the world. Polyvinyl chloride resin as referred to in this specification includes polyvinyl chloride homopolymers, vinyl chloride copolymers, graft vinyl chloride copolymers, and vinyl chloride polymers polymerized in the presence of any other polymer such as a HDT distortion temperature enhancing polymer, impact toughener, barrier polymer, chain transfer agent, stabilizer, plasticizer or flow modifier.

For example a combination of modifications may be made with the PVC polymer by overpolymerizing a low viscosity, high glass transition temperature (Tg) enhancing agent such as SAN resin, or an imidized polymethacrylate in the presence of a chain transfer agent.

In another alternative, vinyl chloride may be polymerized in the presence of said Tg enhancing agent, the agent having been formed prior to or during the vinyl chloride polymerization. However, only those resins possessing the specified average particle size and degree of friability exhibit the advantages applicable to the practice of the present invention.

In the practice of the invention, there may be used polyvinyl chloride homopolymers or copolymers of polyvinyl chloride comprising one or more comonomers copolymerizable therewith. Suitable comonomers for vinyl chloride include acrylic and methacrylic acids; esters of acrylic and methacrylic acid, wherein the ester portion has from 1 to 12 carbon atoms, for example methyl, ethyl, butyl and ethylhexyl acrylates and the like; methyl, ethyl and butyl methacrylates and the like; hydroxyalkyl esters of acrylic and methacrylic acid, for example hydroxymethyl acrylate, hydroxyethyl acrylate, hydroxyethyl methacrylate and the like; glycidyl esters of acrylic and methacrylic acid, for example glycidyl acrylate, glycidyl methacrylate and the like; alpha, beta unsaturated dicarboxylic acids and their anhydrides, for example maleic acid, fumaric acid, itaconic acid and acid anhydrides of these, and the like; acrylamide and methacrylamide; acrylonitrile and methacrylonitrile; maleimides, for example, N-cyclohexyl maleimide; olefin, for example ethylene, propylene, isobutylene, hexene, and the like; vinylidene chloride, for example, vinylidene chloride; vinyl ester, for example vinyl acetate; vinyl ether, for example methyl vinyl ether, allyl glycidyl ether, n-butyl vinyl ether and the like; crosslinking monomers, for example diallyl phthalate, ethylene glycol dimethacrylate, methylene bis-acrylamide, tracrylyl triazine, divinyl ether, allyl silanes and the like; and including mixtures of any of the above comonomers.

The present invention can also use chlorinated polyvinyl chloride (CPVC), wherein PVC containing approximately 57% chlorine is further reacted with chlorine radicals produced from chlorine gas dispersed in water and irradiated to generate chlorine radicals dissolved in water to produce CPVC, a polymer with a higher glass transition temperature (Tg) and heat distortion temperature. Commercial CPVC typically contains by weight from about 58% to about 70% and preferably from about 63% to about 68% chlorine. CPVC copolymers can be obtained by chlorinating such PVC copolymers using conventional methods such as that described in U.S. Pat. No. 2996,489. Commercial sources of CPVC include Lubrizol Corporation.

The preferred composition is a polyvinyl chloride homopolymer.

Commercially available sources of polyvinyl chloride polymers include OxyVinyls LP of Dallas, TX and Shintech USA of Freeport, TX.

### PVC Compounds

Flexible PVC resin compounds typically contain a variety of additives selected according to the performance requirements of the article produced therefrom well within the understanding of one skilled in the art without the necessity of undue experimentation.

The PVC compounds used herein contain effective amounts of additives ranging from 0.01 to about 500 weight parts per 100 weight parts PVC (parts per hundred resin- phr).

For example, various primary and/or secondary lubricants such as oxidized polyethylene, paraffin wax, fatty acids, and fatty esters and the like can be utilized.

Thermal and ultra-violet light (UV) stabilizers can be utilized such as various organo tins, for example dibutyl tin, dibutyltin-S-S'-bi-(isooctylmercaptoacetate), dibutyl tin dilaurate, dimethyl tin diisooctylthioglycolate, mixed metal stabilizers like Barium Zinc and Calcium Zinc, and lead stabilizers (tri-basic lead sulfate, di-basic lead phthalate, for example). Secondary stabilizers may be included for example a metal salt of phosphoric acid, polyols, and epoxidized oils. Specific examples of salts include water-soluble, alkali metal phosphate salts, disodium hydrogen phosphate, orthophosphates such as mono-, di-, and tri-orthophosphates of said alkali metals, alkali metal polyphosphates, -tetrapolyphosphates and -metaphosphates and the like. Polyols such as sugar alcohols, and epoxides such as epoxidized soybean oil can be used. Typical levels of secondary stabilizers range from about 0.1 wt. parts to about 10.0 wt. parts per 100 wt. parts PVC (phr).

In addition, antioxidants such as phenolics, BPA, BHT, BHA, various hindered phenols and various inhibitors like substituted benzophenones can be utilized.

Various processing aids, fillers, pigments, flame retardants and reinforcing materials can also be utilized in amounts up to about 200 or 300 phr. Exemplary processing aids are acrylic polymers such as poly methyl (meth)acrylate based materials.

Adjustment of melt viscosity can be achieved as well as increasing melt strength by employing 0.5 to 5 phr of commercial acrylic process aids such as those from Rohm and Haas under the Paraloid^{®} trademark. Paraloid^{®}. K-120ND, K-120N, K-175, and other processing aids are disclosed in The Plastics and Rubber Institute: International Conference on PVC Processing, Apr. 26-28 (1983), Paper No. 17.

Examples of fillers include calcium carbonate, clay, silica and various silicates, talc, carbon black and the like. Reinforcing materials include glass fibers, polymer fibers and cellulose fibers. Such fillers are generally added in amounts of from about 3 to about 500 phr of PVC. Preferably from 3 to 300 phr of filler are employed for extruded profiles such as louvers or cove base moldings. Also, flame retardant fillers like ATH (Aluminum trihydrates), AOM (ammonium octamolybdate), antimony trioxides, magnesium oxides and zinc borates are added to boost the flame retardancy of polyvinyl chloride. The concentrations of these fillers range from 1 phr to 200 phr.

Examples of various pigments include titanium dioxide, carbon black and the like. Mixtures of fillers, pigments and/or reinforcing materials also can be used.

The compound of the present invention can include other conventional plastics additives in an amount that is sufficient to obtain a desired processing or performance property for the compound. The amount should not be wasteful of the additive nor detrimental to the processing or performance of the compound. Those skilled in the art of thermoplastics compounding, without undue experimentation but with reference to such treatises as Plastics Additives Database (2004) from Plastics Design Library (www.elsevier.com), can select from many different types of additives for inclusion into the compounds of the present invention.

Non-limiting examples of other optional additives include adhesion promoters; biocides (antibacterials, fungicides, and mildewcides), anti-fogging agents; anti-static agents; bonding, blowing and foaming agents; dispersants; fillers and extenders; fire and flame retardants and smoke suppressants; impact modifiers; initiators; lubricants; micas; pigments, colorants and dyes; plasticizers; processing aids; release agents; silanes, titanates and zirconates; slip and anti-blocking agents; stabilizers; stearates; ultraviolet light absorbers; viscosity regulators; waxes; and combinations of them.

Presently preferred PVC compound made into sheets for use in the laminate of this invention is an extruded E7755 White 1302 PVC sheet made by Walton Plastics of Walton Hills, Ohio, USA having thicknesses ranging from 0.635 mm to 1.27 mm (25 mils to 50 mils) and preferably from 0.762 mm to 1.016 mm (30 mils to 40 mils).

### Fiber Reinforced Composite Tape

CFRTP tape for this invention begins with glycol modified polyethylene terephthalate (PETG) commercially available from Eastman Chemical.

Non-limiting examples of the glass fiber are e-glass and s-glass. Individual glass fiber diameters can range from about 10 µm (also called microns) to about 25 µm and preferably from about 14 µm to about 18 µm. The glass fibers can be introduced into the PETG thermoplastic in the form of rovings. The glass fiber reinforcement can comprise continuous fibers or both continuous fibers and discontinuous fibers depending on the amount of reinforcement needed. The diameters of glass fiber and continuity in the various layers of CFRTP tape can be the same or different depending on choice of the polymer engineer.

The glass fibers can comprise from about 50 weight percent to about 75 weight percent and preferably from about 60 weight percent to about 70 weight percent of a tape layer in the laminate of the present invention, with the remaining weight percentage being the PETG thermoplastic resin and also minor amounts, if any, of optional functional additives. The weight percent content of glass fiber in the various tape layers of the laminate can be the same or different depending on choice of the polymer engineer.

Presently preferred CFRTP PETG is a Polystrand^{™} PETG 5842 Uni-Tape product made by PolyOne Advanced Composites of PolyOne Corporation having thicknesses ranging from 0.127 mm to 0.508 mm (5 mils to 20 mils) and preferably 0.203 mm to 0.305 mm (8 mils to 12 mils).

### Laminate Structures

Orientation of the various layers of each laminate needs to be understood to contemplate the scope of the present invention.

The PETG CFRTP is produced by pultrusion in which the fiber reinforcement is parallel to the direction of the pultrusion. In the industry, this is known as the 0° or X or machine direction. For assistance in this document, the 0° or X or machine direction is also symbolized as < as if the direction is moving from right to left across the page of this document.

A layer which is made in the 0° or X or machine or < direction but which is cut and placed in a direction orthogonal to the original direction is known in the industry as the 90° or Y direction or in a cross-direction or transverse direction. For assistance in this document, the 90° or Y or cross or transverse direction is also symbolized as ^ as if the direction is moving from bottom to top across the page of this document.

With this < and ^ symbolism being understood, it is then possible to understand the layering of the PVC sheet and the PETG CFRTP tape within one embodiment of laminates of the invention.

Next, the composition of the layer is abbreviated as either PVC or PETG, with the understanding that PVC includes resin and additives as explained above and PETG includes PETG and glass fiber as explained above.

Next, the thickness of each layer can be identified using the nomenclature of mm (or mils or thousandths of one inch).

For example, "1.016 mm (40)<PVC/0.254 mm (10)<PETG/1.016 mm (40)^PVC" is a three layer laminate with two PVC 1.016 mm (40 mil) sheet outer layers and one PETG 0.254 mm (10 mil) inner layer, wherein the two outer layers have different orientations of 0° or X direction and 90° or Y direction. The inner layer has an orientation of 0° or X direction which is the same as one of the outer layers and orthogonal to the other layer.

Finally, there needs to be understood that the direction of tensile testing for physical properties of the laminate surprisingly can differ whether the pulling direction is the 0° or X direction of the laminate construction or the 90° or Y direction of the laminate construction. Investigation of physical properties depending on tensile testing direction has found unexpected results in various embodiments of the laminates of the invention.

For example, "1.016 mm (40)<PVC/0.254 mm (10)<PETG/1.016 mm (40)^PVC - Pulled <" means the same three-layer laminate as described above in which the laminate is stretched during tensile testing in the same direction as one of the outer layers and the inner layer. While the orthogonal orientations of the two outer layers may "cancel each other" in terms of direction of tensile testing, the orientation of the inner PETG CFRTP layer is in alignment with the direction of tensile testing.

The direction of pulling for tensile testing can then become the orientation for purposes of end use, to the extent that physical properties differ as a result of the differences in pulling direction.

According to the present invention the laminate is selected from the group consisting of:
1.016 mm (40)<PVC/0.254 mm (10)^PETG/1.016 mm (40)^PVC - Pulled <;
1.016 mm (40)<PVC/0.254 mm (10)^PETG/1.016 mm (40)^PVC - Pulled ^;
1.016 mm (40)<PVC/0.254 mm (10)^PETG/1.016 mm (40)^PVC/0.254 mm (10)<PETG/1.016 mm (40)^PVC - Pulled <;
1.016 mm (40)<PVC/0.254 mm (10)^PETG/1.016 mm (40)^PVC/0.254 mm (10)<PETG/1.016 mm (40)^PVC - Pulled ^;
0.762 mm (30)^PVC/0.762 mm (30)<PVC/0.254 mm (10)^PETG/0.762 mm (30)<PVC/0.762 mm (30)^PVC - Pulled <;
0.762 mm (30)^PVC/0.762 mm (30)<PVC/0.254 mm (10)^PETG/0.762 mm (30)<PVC/0.762 mm (30)^PVC - Pulled ^;
0.762 mm (30)<PVC/0.254 mm (10)<PETG/0.762 mm (30)^PVC/0.254 mm (10)^PETG/0.762 mm (30)<PVC/0.254 mm (10)<PETG/0.762 mm (30)^PVC - Pulled <; and
0.762 mm (30)<PVC/0.254 mm (10)<PETG/0.762 mm (30)^PVC/0.254 mm (10)^PETG/0.762 mm (30)<PVC/0.254 mm (10)<PETG/0.762 mm (30)^PVC - Pulled ^.

With knowledge of the thickness, composition, and orientation factors, a person having ordinary skill in the art, without undue experimentation, can construct other acceptable, desirable, and preferred laminates within the scope of this invention.

For example, the laminate can be made of three, five, or seven layers, using the following combinations:
(a) three layers with one PETG inner layer flanked on opposite sides by one PVC layer each;
(b) five layers with one PETG inner layer flanked on opposite sides by two PVC layers each;
(c) five layers with two PETG inner layers flanked on opposites sides by one PVC layer each or
(d) seven layers with three PETG inner layers flanked on opposite sides by one PVC layer each.

### Preparation of Laminates

With both PVC sheet and PETG CFRTP tape being commercially available, preparation of the laminates can be made by use of compression molding of each layer of the laminate upon each exposed layer of the laminate. When molding a part such as a tensile test piece used in ASTM D638, commonly called a "dog bone", compression pressures can range from about 13.8-17.2 MPa (2000 to about 2500 lbs./in²) and preferably from about 15.1-16.5 MPa (2200 to about 2400 lbs./in²). Molding temperatures can range from about 171°C to about 193°C (340°F -380°F) and preferably from about 179°C to about 185°C (355°F -365°F). Durations of the compression heat and cool cycle can be about 180 seconds for ramping up to full pressure, about 120 seconds at full pressure and full heat, and about 900 seconds for both ramping down pressure and heat. A person having ordinary skill in the art of compression molding of multiple thermoplastic layers can use other temperatures, compression cycles, and compression pressures without undue experimentation.

Alternatively, to form the laminate, PVC and PETG CFRTP tape can be made by co-extrusion, which comprises extrusion of two or more polymeric layers simultaneously brought together into contact at a point prior to extrusion through a shape-forming co-extrusion die such as shown in U. S. Pat. No. 3,476,627 (Squires).

Co-extrusion uses procedures well known in the art. U.S. Pat. No. 6,855,402 (Rabinovitch et al.), incorporated by reference herein, discloses co-extrusion generally and also particularly at Example 3 to provide additional guidance for a person having ordinary skill in the art, such as the use of single screw extruders with zone temperatures for each of PVC and PETG, die temperature and pressure, and screw speed. Without undue experimentation, that person having ordinary skill in the art can reverse the layering of the laminate in co-extrusion to provide the PVC extruded sheet as the outer layers and the PETG CFRTP tape as the inner layer(s).

Another explanation of co-extrusion is provided by U.S. Pat. No. 7,238,739, in which rigid PVC can be extruded or molded as cap stock fused or otherwise adhered to substrate plastics other than rigid PVC to form a laminate. Co-extruded or laminated cap stock can be prepared as shown in U.S. Pat. No. 4,100,325 (Summers et a.), to form a composite layer or laminated plastic article.

### USEFULNESS OF THE INVENTION

Laminates of the invention can be used in any market presently serviced by the rigid PVC compounds. The reinforcement provided by the CFRTP tape(s) in the laminate extends the service capability to previously unseen levels. End use applications can be automotive, trucking, train, aerospace, and building & construction applications due to their light weight and exceptional strength.

Specifically, building and construction can benefit from super-rigid PVC laminates of the invention. The durability of PVC as a construction material is now enhanced by the reinforcement provided by the CFRTP tape or tapes in the laminate. Windows, doors, railings, siding, and other building products can be made ever sturdier by use of laminates of the present invention.

### EXAMPLES

Table 1 shows compositions, orientation, and thicknesses of laminates of Comparative Example A having no PETG CFRTP tape layer and of Examples 1-5 which do. Examples 2 and 3 are the same composition, orientation, and thicknesses but are tensile tested in orthogonal directions. Examples 4 and 5 are also the same composition, orientation, and thicknesses but are tensile tested in orthogonal directions. From these comparisons of successful examples, one can identify unexpected properties such as the different in percentage tensile elongation at break for Examples 4 and 5.

The 0.254 mm (10 mil) thick layers were the CFRTP PETG tape (PETG according to the present invention is an abbreviation for the CFRTP polyethylene terephthalate glycol tape).

The 0.762 mm (30 mil) and 1.016 mm (40 mil) thick layers were the PVC sheets.

The layers were laminated using compression molding. A Wabash 150 Ton press with a 12" bore (136 metric tons and 30.5 cm bore) was used, achieving approximately 15.86 MPa (2300 lbs/sq. in.) of pressure on the various layers of a laminate in the form of tensile testing bars as used in ASTM D638. The set temperature on all platens was 182°C (360°F). The molding cycle was as follows: Pre-heat: 0 seconds; Ramp: 180 seconds (ramping up to full pressure); Hold: 120 seconds (maintains full pressure); Cooling: 900 seconds (maintains full pressure), for a total time of 1200 seconds (20 minutes).

The following ASTM tests were used:
Tensile Modulus, Tensile Strength, and Tensile Elongation at Break: ASTM D638
Notched Izod Impact: ASTM D256
Heat Distortion Temperature (HDT): ASTM D648
Coefficient of Linear Thermal Expansion: ASTM D696.

| **Table 1** | | | | | | |
|---|---|---|---|---|---|---|
| **Part A** | | | | Comparative A | Example 1 | |
| | | | | 1.016 mm (40)<PVC/0.762 mm (30)^PVC/0.762 mm (30)<PVC/1.016 mm (40)^PVCPulled < | 1.016 mm (40)<PVC/0.254 mm (10)^PETG/ 1.016 mm (40)^PVC/ 0.254 mm (10)<PETG/ 1.016 mm (40)^PVC -- Pulled ^ | % 1 vs. A |
| Sheet configuration (size) --> | | | | 1.016 mm (40)/ 0.762 mm (30)/ 0.762 mm (30)/1.016 mm (40) | 1.016 mm (40)/ 0.254 mm (10)/1.016 mm (40)/ 0.254 mm (10)/1.016 mm (40) | |
| Sheet configuration (orientation) --> | | | | < / ^ / < / ^ | </^/^/</^ | |
| Direction of Pull | | | | 0 degrees | 90 degrees | |
| Tensile Modulus (MPa) | | | | 2,987.04 | 4,978.92 | 67% |
| | | | STD Dev (MPa) | 125.37 | 338.92 | |
| Tensile Strength @ peak load (MPa) | | | | 46.08 | 92.69 | 101% |
| | | STD Dev (MPa) | | 1.04 | 10.65 | |
| Tensile Elongation @ Break (%) | | | | 107.26 | 3.11 | -97% |
| | STD Dev (%) | | | 34.98 | 0.22 | |
| Notched Izod (23°C) Nm (ft*lb/in) Instrumented Impact | | | | 23.7241 Nm (17.498) | 8.9294 Nm (6.586) | -62% |
| HDT 264psi (1.82 Mpa), unannealed | | | | 65.1 | 71.9 | 10% |
| (°C) | | | | | | |
| Coefficient of Expansion (2.54cm/2.54 cm/°C) | | | | 0.000073 | 0.000050 | -32% |
| | | | STD Dev (2.54cm/2.54 cm/°C) | 0.000024 | 0.000004 | |

| **Table 1** | | | | | | |
|---|---|---|---|---|---|---|
| **Part 2** | | Example 2 | Example 3 | | | |
| | | 0.762 mm (30)^PVC/0.762 mm (30)<PVC/ 0.254 mm (10)^PETG/0.762 mm (30)<PVC/0.762 mm (30)^PVC -- Pulled ^ | 0.762 mm (30)^PVC/0.762 mm (30)<PVC/ 0.254 mm (10)^PETG/0.762 mm (30)<PVC/ 0.762 mm (30)^PVC -- Pulled < | % 2 vs. A | %3 vs. A | % 3 vs. 2 |
| Sheet configuration (size) --> | | 0.762 mm (30)/0.762 mm (30)/ 0.254 mm (10)/0.762 mm (30)/0.762 mm (30) | 0.762 mm (30)/0.762 mm (30)/ 0.254 mm (10)/0.762 mm (30)/0.762 mm (30) | | | |
| Sheet configuration (orientation) --> | | ^ / < / ^ / < / ^ | ^/</^/</^ | | | |
| Direction of Pull | | 90 degrees | 0 degrees | | | |
| Tensile Modulus (MPa) | | 3,073.61 | 4,686.62 | 3% | 57% | 52% |
| | STD Dev (MPa) | 317.73 | 558.39 | | | |
| Tensile Strength @ peak load (MPa) | | 44.44 | 78.00 | -4% | 69% | 76% |
| | STD Dev (MPa) | 0.95 | 16.53 | | | |
| Tensile Elongation @ Break (%) | | 6.31 | 2.59 | -94% | -98% | -59% |
| | STD Dev (%) | 1.26 | 0.93 | | | |
| Notched Izod (23°C) Nm (ft*lb/in) Instrumented Impact | | 2.5625 Nm (1.89) | 11.1584 Nm (8.23) | -89% | -53% | 335% |
| HDT 264psi (1.82 Mpa), unannealed | | 65.3 | 73.1 | 0% | 12% | 12% |
| Coefficient of Expansion | | 0.000065 | 0.000045 | -11% | -38% | -31% |
| (2.54cm/2.54 cm/°C) | | | | | | |
| | STD Dev (2.54cm/2.54 cm/°C) | 0.000005 | 0.000006 | | | |

| **Table 1** | | | | | | |
|---|---|---|---|---|---|---|
| **Part 3** | | Example 4 | Example 5 | | | |
| | | 0.762 mm (30)<PVC/0.254 mm (10)<PETG/ 0.762 mm (30)^PVC/0.254 mm (10)^PETG/ 0.762 mm (30)<PVC/0.254 mm (10)<PETG/ 0.762 mm (30)^PVC-- Pulled ^ | 0.762 mm (30)<PVC/0.254 mm (10)<PETG/ 0.762 mm (30)^PVC/0.254 mm (10)^PETG/ 0.762 mm (30)<PVC/0.254 mm (10)<PETG/ 0.762 mm (30)^PVCPulled < | % 4 vs. A | %5 vs. A | % 5 vs. 4 |
| Sheet configuration (size) --> | | 0.762 mm (30)/ 0.254 mm (10)/0.762 mm (30)/ 0.254 mm (10)/0.762 mm (30)/ 0.254 mm (10)/0.762 mm (30) | 0.762 mm (30)/ 0.254 mm (10)/0.762 mm (30)/ 0.254 mm (10)/0.762 mm (30)/ 0.254 mm (10)/0.762 mm (30) | | | |
| Sheet configuration (orientation) --> | | </</^/^/</</^ | </</^/^/</</^ | | | |
| Direction of Pull | | 90 degrees | 0 degrees | | | |
| Tensile Modulus (MPa) | | 5,004.81 | 7,701.51 | 68% | 158% | 54% |
| | STD Dev (MPa) | 172.41 | - | | | |
| Tensile Strength @ peak load (MPa) | | 49.08 | 154.83 | 7% | 236% | 215% |
| | STD Dev (MPa) | 3.15 | - | | | |
| Tensile Elongation @ Break (%) | | 2.664 | 3.109 | -98% | -97% | 17% |
| | STD Dev (%) | 0.74 | | | | |
| Notched Izod (23°C) Nm (ft*lb/in) Instrumented Impact | | 9.328 Nm (6.88) | 16.9748 Nm (12.52) | -61% | -28% | 82% |
| HDT 264psi (1.82 Mpa), unannealed | | 67.4 | 73.3 | 4% | 13% | 9% |
| Coefficient of Expansion (2.54cm/2.54 cm/°C) | | 0.000049 | 0.000037 | -33% | -49% | -24% |
| | STD Dev (2.54cm/2.54 cm/°C ) | 0.000003 | 0.000005 | | | |

## Claims

1. A laminate, comprising:
outer layers of poly(vinyl chloride) sheet, each having at least 0.635 mm thickness and
at least one inner layer of CRFTP tape of polyethylene terephthalate glycol having less than 0.508 mm thickness, and
wherein the laminate is selected from the group consisting of
1.016 mm (40)<PVC/0.254 mm (10)^PETG/1.016 mm (40)^PVC - Pulled <;
1.016 mm (40)<PVC/0.254 mm (10)^PETG/1.016 mm (40)^PVC - Pulled ^;
1.016 mm (40)<PVC/0.254 mm (10)^PETG/1.016 mm (40)^PVC/0.254 mm (10)<PETG/1.016 mm (40)^PVC - Pulled <;
1.016 mm (40)<PVC/0.254 mm (10)^PETG/1.016 mm (40)^PVC/0.254 mm (10)<PETG/1.016 mm (40)^PVC - Pulled ^;
0.762 mm (30)^PVC/0.762 mm (30)<PVC/0.254 mm (10)^PETG/0.762 mm (30)<PVC/0.762 mm (30)^PVC - Pulled <;
0.762 mm (30)^PVC/0.762 mm (30)<PVC/0.254 mm (10)^PETG/0.762 mm (30)<PVC/0.762 mm (30)^PVC - Pulled ^;
0.762 mm (30)<PVC/0.254 mm (10)<PETG/0.762 mm (30)^PVC/0.254 mm (10)^PETG/0.762 mm (30)<PVC/0.254 mm (10)<PETG/0.762 mm (30)^PVC - Pulled <; and
0.762 mm (30)<PVC/0.254 mm (10)<PETG/0.762 mm (30)^PVC/0.254 mm (10)^PETG/0.762 mm (30)<PVC/0.254 mm (10)<PETG/0.762 mm (30)^PVC - Pulled ^;
wherein PVC is an abbreviation for the poly(vinyl chloride) sheet, PETG is an abbreviation for the CFRTP polyethylene terephthalate glycol tape, "pulled" means the direction of tensile testing, 30 (0.762 mm) and 40 (1.016 mm) means the thickness of the PVC sheet in thousandths of inches, 10 (0.254 mm) means the thickness of the PETG tape, < means the 0° direction relative to machine direction of making of the CFRTP tape, and ^ means the 90° direction relative to machine direction of making of the CFRTP tape.

2. The laminate of Claim 1, wherein the polyvinyl chloride comprises (a) polyvinyl chloride homopolymers, (b) vinyl chloride copolymers, (c) graft vinyl chloride copolymers, (d) chlorinated polyvinyl chloride, or (e) vinyl chloride polymers polymerized in the presence of any other polymer such as a HDT distortion temperature enhancing polymer, impact toughener, barrier polymer, chain transfer agent, stabilizer, plasticizer or flow modifier.

3. The laminate of Claim 2, wherein the polyvinyl chloride sheet is a compound of polyvinyl chloride and optionally additives selected from the group consisting of adhesion promoters; anti-fogging agents; anti-oxidants; anti-static agents; biocides; bonding, blowing or foaming agents; clays; dispersants; fibers; fillers and extenders; fire and flame retardants and smoke suppressants; impact modifiers; initiators; lubricants; micas; pigments and colorants; plasticizers; processing aids; release agents; silanes, titanates and zirconates; silicates; slip and anti-blocking agents; stabilizers; stearates; ultraviolet light absorbers; viscosity regulators; waxes; and combinations of them.

4. The laminate of Claim 1, wherein the CFRTP tape comprises continuous glass fiber embedded in the polyethylene terephthalate glycol, wherein the glass fibers have individual diameters ranging from about 10 µm to about 25 µm.

5. The laminate of Claim 3, wherein the CFRTP tape comprises continuous glass fiber embedded in the polyethylene terephthalate glycol, wherein the glass fibers have individual diameters ranging from about 10 µm to about 25 µm.

6. The laminate of Claim 4, wherein the glass fibers in the CFRTP tape comprise from about 50 weight percent to about 75 weight percent of the tape.

7. The laminate of Claim 5, wherein the glass fibers in the CFRTP tape comprise from about 50 weight percent to about 75 weight percent of the tape.

8. The laminate of Claim 6, wherein the CFRTP tape has a thickness of from about 0.127 mm to about 0.508 mm.

9. The laminate of Claim 7, wherein the CFRTP tape has a thickness of from about 0.127 mm to about 0.508 mm.

10. The laminate of Claim 1, wherein the CFRTP tape is used as at least two different inner layers of the laminate oriented in 0° and 90° directions, respectively.

11. The laminate of Claim 10 wherein the poly(vinyl chloride) sheets are also used as at least two different inner layers of the laminate oriented in 0° and 90° directions, respectively.

12. The laminate of Claim 1, wherein the PVC sheets as outer layers are oriented in the 90° direction and wherein the PVC sheets are also used as at least two different inner layers of the laminate, both oriented in a 0° direction.

13. The laminate of Claim 1, wherein the laminate comprises three layers, five layers, or seven layers.

14. The laminate of Claim 13, wherein the laminate comprises:
(a) three layers with one PETG inner layer flanked on opposite sides by one PVC layer each;
(b) five layers with one PETG inner layer flanked on opposite sides by two PVC layers each;
(c) five layers with two PETG inner layers flanked on opposites sides by one PVC layer each or
(d) seven layers with three PETG inner layers flanked on opposite sides by one PVC layer each.

## Patentansprüche

1. Laminat umfassend:
Außenschichten aus Poly(vinylchlorid)-Folie, wobei jede mindestens 0,635 mm dick ist und
mindestens eine Innenschicht aus CRFTP-Band aus Polyethylenterephthalat-Glykol, die weniger als 0,508 mm dick ist, und
wobei das Laminat ausgewählt ist aus der Gruppe bestehend aus
1,016 mm (40)<PVC/0,254 mm (10)^PETG/1,016 mm (40)^PVC - gezogen <;
1,016 mm (40)<PVC/0,254 mm (10)^PETG/1,016 mm (40)^PVC - gezogen ^;
1,016 mm (40)<PVC/0,254 mm (10)^PETG/1,016 mm (40)^PVC/0,254 mm (10)<PETG/1,016 mm (40)^PVC - gezogen <;
1,016 mm (40)<PVC/0,254 mm (10)^PETG/1,016 mm (40)^PVC/0,254 mm (10)<PETG/1,016 mm (40)^PVC - gezogen ^;
0,762 mm (30) ^PVC/0,762 mm (30)<PVC/0,254 mm (10)^PETG/0,762 mm (30)<PVC/0,762 mm (30)^PVC - gezogen <;
0,762 mm (30)^PVC/0,762 mm (30)<PVC/0,254 mm (10)^PETG/0,762 mm (30)<PVC/0,762 mm (30)^PVC - gezogen ^;
0,762 mm (30)<PVC/0,254 mm (10)<PETG/0,762 mm (30)^PVC/0,254 mm (10)^PETG/0,762 mm (30)<PVC/0,254 mm (10)<PETG/0,762 mm (30)^PVC - gezogen <; und
0,762 mm (30)<PVC/0,254 mm (10)<PETG/0,762 mm (30)^PVC/0,254 mm (10)^PETG/0,762 mm (30)<PVC/0,254 mm (10)<PETG/0,762 mm (30)^PVC - gezogen ^;
wobei PVC eine Abkürzung für die Poly(vinylchlorid)-Folie ist, PETG eine Abkürzung für das CFRTP-Polyethylenterephthalat-Glykol-Band ist, "gezogen" die Richtung der Zugprüfung bedeutet, 30 (0,762 mm) und 40 (1,016 mm) die Dicke der PVC-Folie in Tausendstel Zoll ist, 10 (0,254 mm) die Dicke des PETG-Bandes ist, < die 0°-Richtung relativ zur Maschinenrichtung bei der Herstellung des CFRTP-Bandes ist und ^ die 90°-Richtung relativ zur Maschinenrichtung bei der Herstellung des CFRTP-Bandes ist.

2. Laminat gemäß Anspruch 1, wobei das Poly(vinylchlorid) umfasst: (a) Poly(vinylchlorid)-Homopolymere, (b) Vinylchlorid-Copolymere, (c) Pfropf-Vinylchlorid-Copolymere, (d) chloriertes Poly(vinylchlorid) oder (e) Vinylchlorid-Polymere, polymerisiert in Gegenwart eines beliebigen anderen Polymers, zum Beispiel eines HDT-Verzerrungstemperatur-erhöhenden Polymers, Schlagzähmachers, Barrierepolymers, Kettenübertragungsmittels, Stabilisators, Weichmachers oder Fließmodifikators.

3. Laminat gemäß Anspruch 2, wobei die Poly(vinylchlorid)-Folie ein Compound aus Poly(vinylchlorid) und optional Additiven ist, ausgewählt aus der Gruppe bestehend aus Haftvermittlern; Antibeschlagmitteln; Antioxidantien; Antistatika; Bioziden; Bindemitteln, Treibmitteln oder Schäumungsmitteln; Tonen; Dispergiermitteln; Fasern; Füllstoffen und Streckmitteln; Feuer- und Flammschutzmitteln und Rauchunterdrückungsmitteln; Schlagzähmodifikatoren; Initiatoren; Schmiermitteln; Glimmer; Pigmenten und Farbstoffen; Weichmachern; Hilfsmitteln für die Verarbeitung; Trennmitteln; Silanen, Titanaten und Zirkonaten; Silikaten; Gleit- und Antiblockiermitteln; Stabilisatoren; Stearaten; UV-Absorbern; Viskositätsreglatoren; Wachsen; und Kombinationen davon.

4. Laminat gemäß Anspruch 1, wobei das CFRTP-Band eine kontinuierliche Glasfaser umfasst, die in das Polyethylenterephthalat-Glykol eingebettet ist, wobei die Glasfasern individuelle Durchmesser im Bereich von etwa 10 µm bis etwa 25 µm haben.

5. Laminat gemäß Anspruch 3, wobei das CFRTP-Band eine kontinuierliche Glasfaser umfasst, die in das Polyethylenterephthalat-Glykol eingebettet ist, wobei die Glasfasern individuelle Durchmesser im Bereich von etwa 10 µm bis etwa 25 µm haben.

6. Laminat gemäß Anspruch 4, wobei die Glasfasern in dem CFRTP-Band etwa 50 Gewichts-% bis etwa 75 Gewichtsprozent des Bandes umfassen.

7. Laminat gemäß Anspruch 5, wobei die Glasfasern in dem CFRTP-Band etwa 50 Gewichts-% bis etwa 75 Gewichtsprozent des Bandes umfassen.

8. Laminat gemäß Anspruch 6, wobei das CFRTP-Band eine Dicke von etwa 0,127 mm bis etwa 0,508 mm hat.

9. Laminat gemäß Anspruch 7, wobei das CFRTP-Band eine Dicke von etwa 0,127 mm bis etwa 0,508 mm hat.

10. Laminat gemäß Anspruch 1, wobei das CFRTP-Band als mindestens zwei verschiedene Innenschichten des Laminats verwendet wird, die in 0°- bzw. 90°-Richtung ausgerichtet sind.

11. Laminat gemäß Anspruch 10, wobei die Poly(vinylchlorid)-Folien auch als mindestens zwei verschiedene Innenschichten des Laminats verwendet werden, die in 0°- bzw. 90°-Richtung ausgerichtet sind.

12. Laminat gemäß Anspruch 1, wobei die PVC-Folien als Außenschichten in 90°-Richtung ausgerichtet sind und wobei die PVC-Folien auch als mindestens zwei verschiedene Innenschichten des Laminats verwendet werden, die beide in 0°-Richtung ausgerichtet sind.

13. Laminat gemäß Anspruch 1, wobei das Laminat drei Schichten, fünf Schichten oder sieben Schichten umfasst.

14. Laminat gemäß Anspruch 13, wobei das Laminat umfasst:
(a) drei Schichten mit einer PETG-Innenschicht, die auf gegenüberliegenden Seiten von jeweils einer PVC-Schicht flankiert wird;
(b) fünf Schichten mit einer PETG-Innenschicht, die auf gegenüberliegenden Seiten von jeweils zwei PVC-Schichten flankiert wird;
(c) fünf Schichten mit zwei PETG-Innenschichten, die auf gegenüberliegenden Seiten von jeweils einer PVC-Schicht flankiert werden oder
(d) sieben Schichten mit drei PETG-Innenschichten, die auf gegenüberliegenden Seiten von jeweils einer PVC-Schicht flankiert werden.

## Revendications

1. Stratifié, comprenant :
des couches externes de feuille de poly(chlorure de vinyle), chacune présentant au moins 0,635 mm d'épaisseur et
au moins une couche interne de bande CRFTP en polyéthylène téréphtalate glycol présentant moins de 0,508 mm d'épaisseur, et
dans lequel le stratifié est choisi dans le groupe consistant en
1,016 mm (40) < PVC/0,254 mm (10)^PETG/1,016 mm (40)^PVC - Tiré < ;
1,016 mm (40) < PVC/0,254 mm (10)^PETG/1,016 mm (40)^PVC - Tiré ^ ;
1,016 mm (40) < PVC/0,254 mm (10)^PETG/1,016 mm (40)^PVC/0,254 mm (10) < PETG/1,016 mm (40)^PVC - Tiré < ;
1,016 mm (40) < PVC/0,254 mm (10)^PETG/1,016 mm (40)^PVC/0,254 mm (10) < PETG/1,016 mm (40)^PVC - Tiré ^ ;
0,762 mm (30)^PVC/0,762 mm (30) < PVC/0,254 mm (10)^PETG/0,762 mm (30) < PVC/0,762 mm (30)^PVC - Tiré < ;
0,762 mm (30)^PVC/0,762 mm (30) < PVC/0,254 mm (10)^PETG/0,762 mm (30) < PVC/0,762 mm (30)^PVC - Tiré ^ ;
0,762 mm (30) < PVC/0,254 mm (10) < PETG/0,762 mm (30)^PVC/0,254 mm (10)^PETG/0,762 mm (30) < PVC/0,254 mm (10) < PETG/0,762 mm (30)^PVC - Tiré < ; et
0,762 mm (30) < PVC/0,254 mm (10) < PETG/0,762 mm (30)^PVC/0,254 mm (10)^PETG/0,762 mm (30) < PVC/0,254 mm (10) < PETG/0,762 mm (30)^PVC - Tiré ^ ;
dans lequel PVC est l'abréviation de la feuille de poly(chlorure de vinyle), PETG est l'abréviation de la bande de polyéthylène téréphtalate glycol CFRTP, « tiré » signifie la direction de l'essai de traction, 30 (0,762 mm) et 40 (1,016 mm) signifient l'épaisseur de la feuille de PVC en millièmes de pouce, 10 (0,254 mm) signifie l'épaisseur de la bande PETG, < désigne la direction 0° par rapport au sens machine de fabrication de la bande CFRTP, et ^ désigne la direction à 90° par rapport au sens machine de fabrication de la bande CFRTP.

2. Stratifié selon la revendication 1, dans lequel le polychlorure de vinyle comprend (a) des homopolymères de polychlorure de vinyle, (b) des copolymères de chlorure de vinyle, (c) des copolymères de chlorure de vinyle greffés, (d) du polychlorure de vinyle chloré, ou (e) des polymères de chlorure de vinyle polymérisés en présence de tout autre polymère tel qu'un polymère améliorant la température de déformation HDT, un durcisseur aux chocs, un polymère barrière, un agent de transfert de chaîne, un stabilisant, un plastifiant ou un modificateur d'écoulement.

3. Stratifié selon la revendication 2, dans lequel la feuille de polychlorure de vinyle est un composé de polychlorure de vinyle et éventuellement d'additifs choisis dans le groupe consistant en des promoteurs d'adhérence ; des agents anti-buée ; des anti-oxydants ; des agents antistatiques ; des biocides ; des agents liants, gonflants ou moussants ; des argiles ; des dispersants ; des fibres ; des charges et des extendeurs ; des ignifuges et retardateurs de flammes et des absorbeurs de fumées ; des modificateurs d'impact ; des initiateurs ; des lubrifiants ; des micas ; des pigments et des colorants ; des plastifiants ; des auxiliaires technologiques ; des agents de démoulage ; des silanes, titanates et zirconates ; des silicates ; des agents antidérapants et anti-bloquants ; des stabilisants ; des stéarates ; des absorbeurs de lumière ultraviolette ; des régulateurs de viscosité ; des cires ; et des combinaisons de ceux-ci.

4. Stratifié selon la revendication 1, dans lequel la bande CFRTP comprend une fibre de verre continue intégrée dans le polyéthylène téréphthalate glycol, dans lequel les fibres de verre présentent des diamètres individuels allant d'environ 10 µm à environ 25 µm.

5. Stratifié selon la revendication 3, dans lequel la bande CFRTP comprend une fibre de verre continue intégrée dans le polyéthylène téréphthalate glycol, dans lequel les fibres de verre présentent des diamètres individuels allant d'environ 10 µm à environ 25 µm.

6. Stratifié selon la revendication 4, dans lequel les fibres de verre dans la bande CFRTP constituent d'environ 50 % en poids à environ 75 % en poids de la bande.

7. Stratifié selon la revendication 5, dans lequel les fibres de verre dans la bande CFRTP constituent d'environ 50 % en poids à environ 75 % en poids de la bande.

8. Stratifié selon la revendication 6, dans lequel la bande CFRTP présente une épaisseur d'environ 0,127 mm à environ 0,508 mm.

9. Stratifié selon la revendication 7, dans lequel la bande CFRTP présente une épaisseur d'environ 0,127 mm à environ 0,508 mm.

10. Stratifié selon la revendication 1, dans lequel la bande CFRTP est utilisée en tant qu'au moins deux couches internes différentes du stratifié orientées respectivement dans les directions 0° et 90°.

11. Stratifié selon la revendication 10, dans lequel les feuilles de poly(chlorure de vinyle) sont également utilisées en tant qu'au moins deux couches internes différentes du stratifié orientées respectivement dans les directions 0° et 90°.

12. Stratifié selon la revendication 1, dans lequel les feuilles de PVC en tant que couches externes sont orientées dans la direction de 90° et dans lequel les feuilles de PVC sont également utilisées en tant qu'au moins deux couches internes différentes du stratifié, toutes deux orientées dans une direction de 0°.

13. Stratifié selon la revendication 1, dans lequel le stratifié comprend trois couches, cinq couches ou sept couches.

14. Stratifié selon la revendication 13, dans lequel le stratifié comprend :
(a) trois couches avec une couche interne en PETG flanquée sur les côtés opposés d'une couche de PVC chacune ;
(b) cinq couches avec une couche interne en PETG flanquée sur les côtés opposés de deux couches de PVC chacune ;
(c) cinq couches avec deux couches internes en PETG flanquées sur les côtés opposés par une couche de PVC chacune ou
(d) sept couches avec trois couches internes en PETG flanquées sur les côtés opposés d'une couche de PVC chacune.
